# FASCICULE DE BREVET EUROPEEN

(11) **EP 3 931 282 B1**
(45) Date de publication et mention de la délivrance du brevet: **18.01.2023**
(21) Numéro de dépôt: 20710222.9
(22) Date de dépôt: 13.02.2020
(51) Int. Cl.: C09J 153/02, C09J 7/38

(54) **HMPSA INCORPORANT UN PLASTIFIANT EN MATIERE PREMIERE RENOUVELABLE**
HMPSA MIT EINEM WEICHMACHER AUS EINEM ERNEUERBAREN ROHSTOFF
HMPSA INCORPORATING A PLASTICISER MADE FROM A RENEWABLE RAW MATERIAL

(30) Priorité: 28.02.2019 FR 1902046
(43) Date de publication de la demande: 05.01.2022
(73) Titulaire: Bostik SA, 92700 Colombes (FR)
(72) Inventeur: ROBERT, Christophe, 60280 VENETTE (FR); RAFAITIN, Amandine, 60280 VENETTE (FR); IDTTALBE, Lahoucine, 60280 VENETTE (FR)
(74) Mandataire: Arkema Patent
(86) Numéro de dépôt international: PCT/FR2020/050270
(87) Numéro de publication internationale: WO 2020/174155

(56) Documents cités:
- US-A1- 2006 229 411
- US-A1- 2008 064 852
- US-A1- 2016 032 156

## Description

La présente invention a pour objet une composition adhésive thermofusible sensible à la pression (ou HMPSA) ainsi qu'un système multicouche qui comprend une couche constituée par ladite composition et qui est adapté à la fabrication d'articles auto-adhésifs, notamment d'étiquettes auto-adhésives.

Les adhésifs sensibles à la pression (également dénommés colles auto-adhésives ou encore, en anglais, "Pressure Sensitive Adhesives" ou PSA) sont des substances qui confèrent à la couche support qui en est revêtue un pouvoir collant immédiat à température ambiante. Souvent désigné par le terme anglais de "tack" ou encore parfois par le terme de "pégosité", ce pouvoir collant immédiat permet l'adhésion instantanée dudit support auto-adhésif à toutes sortes de substrats, sous l'effet d'une pression légère et brève. Les PSA sont largement utilisés pour la fabrication d'étiquettes auto-adhésives qui sont fixées sur des articles (par exemple des emballages) à des fins de présentation d'informations (telles que code barre, dénomination, prix) et/ou à des fins décoratives. Les PSA sont également mis en œuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; le maintien de câbles électriques dans l'industrie des transports ; le collage des moquettes par rubans adhésifs à double face.

Les PSA sont généralement appliqués, par des procédés d'enduction en continu mis en œuvre par des industriels appelés "enducteurs", sur la totalité de la surface d'une couche support, le cas échéant imprimable, de grandes dimensions, à raison d'une quantité (généralement exprimée en g/m²) et désignée ci-après par le terme de "grammage". La couche support est généralement constituée de papier ou de film d'un matériau polymère à une ou plusieurs couches. La couche de composition adhésive qui recouvre la couche support est elle-même recouverte d'une couche anti-adhérente protectrice (souvent dénommée par l'appellation anglaise de "release liner"), qui est souvent constituée d'un film siliconé. Le système multicouche obtenu est généralement conditionné par enroulement sous forme de larges bobines (ou rouleaux) ayant jusqu'à 2 m de largeur et 1 m de diamètre, qui peuvent être stockées et transportées, un tel conditionnement étant souvent désigné sous l'expression anglaise de "roll stock".

Ce système multicouche peut être ultérieurement converti en étiquettes auto-adhésives applicables par un fabricant d'étiquettes appelé "transformateur" (ou parfois par la dénomination anglaise de "converter"), au moyen de procédés de transformation qui incluent l'impression des éléments informatifs et/ou décoratifs désirés sur la face imprimable de la couche support, puis la découpe à la forme et aux dimensions souhaitées.

La couche anti-adhérente protectrice peut être facilement enlevée sans modification de la couche d'adhésif qui reste fixée sur la couche support imprimable. Après séparation de sa couche anti-adhérente protectrice, l'étiquette est appliquée en général à une température proche de la température ambiante sur l'article (par exemple l'emballage) à revêtir soit manuellement, soit à l'aide d'étiqueteuses sur des chaînes automatisées de conditionnement.

Ce système multicouche peut être également transformé en rubans auto-adhésifs par découpe et conditionnement en rouleaux de largeur et de longueur déterminées.

Les PSA permettent avantageusement, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des emballages ou bien, s'agissant de rubans, sur des cartons d'emballage à mettre en forme), propre à l'obtention de cadences de production industrielle importantes.

Les adhésifs thermofusibles (souvent désignés sous l'appellation anglaise de "Hot Melt adhesives" ou HM) sont des substances solides à température ambiante qui ne contiennent ni eau ni solvant. Ils sont appliqués à l'état fondu et se solidifient lors du refroidissement, formant ainsi un joint qui, en raison de son pouvoir adhésif, assure la fixation des substrats à assembler. Certains Hot Melt sont formulés de manière à conférer au support qui en est revêtu un caractère relativement dur et dénué de tack. D'autres Hot Melt assurent au support un caractère relativement mou et un tack important : ce sont des PSA qui sont largement utilisés pour la fabrication d'articles auto-adhésifs (par exemple des étiquettes auto-adhésives). Les adhésifs correspondants sont désignés par l'appellation d' "adhésifs thermofusibles sensibles à la pression" ou encore, en anglais, par celle de "Hot Melt Pressure Sensitive Adhesive" (ou "HMPSA"). Ils permettent donc également, en raison de leur pouvoir adhésif, de fixer solidement l'étiquette ou le ruban sur le substrat désiré, qu'il s'agisse par exemple de l'emballage à étiqueter ou du carton à assembler.

Les HMPSA comprennent généralement un polymère thermoplastique (en particulier un copolymère à bloc styrénique) en combinaison avec des résines tackifiantes et des plastifiants.

On connaît, par exemple par les demandes internationales WO 2008/077509 et WO 2008/110685, de telles compositions HMPSA et des systèmes multicouches qui comprennent une couche adhésive constituée de ladite composition, ainsi qu'une couche support imprimable et une couche protectrice adjacentes.

Les plastifiants qui sont mis en œuvre dans ces compositions HMPSA, et notamment celles divulguées par ces 2 dernières demandes, sont généralement des huiles hydrocarbonées qui sont dérivées du pétrole brut et qui sont de nature paraffinique, aromatique et/ou naphténique. De tels plastifiants sont par exemples commercialisés sous la dénomination de Primol^{®} 352 par la société ExxonMobil, Nyflex^{®} 222B ou Nyflex^{®} 223 par la société Nynas.

Or, dans le cadre actuel du développement d'une chimie "verte", on cherche de plus en plus à s'affranchir, ou tout au moins à diminuer la part, de matières premières non renouvelables, d'origine pétrolière ou fossile, au profit de matières premières renouvelables, notamment d'origine végétale.

Il existe donc un besoin de remplacement des plastifiants d'origine pétrolière mis en œuvre dans les compositions HMPSA par des plastifiants obtenus à partir de matières premières renouvelables.

La demande internationale WO 99/13016 décrit des compositions thermofusibles qui contiennent, en tant qu'agent plastifiant, une huile naturelle hydrogénée ou non hydrogénée comprenant des acides gras contenant de 6 à 22 atomes de carbone. Des acides gras préférés sont des mélanges en C10-C14 atomes de carbone, tels que l'huile de coco et des mélanges en C18 tels que les huile de soja et de tournesol. Ces compositions thermofusibles sont mises en œuvre dans un procédé de collage d'un substrat à base de tissu ou de non-tissé sur d'autres substrats, en vue de la fabrication d'un produit absorbant jetable, comme par exemple les couches jetables. Toutefois, ce document n'enseigne nullement, ni ne suggère, une composition HMPSA possédant les propriétés de pouvoir adhésif et de tack requises pour sa mise en œuvre dans un système multicouche approprié à la fabrication d'articles auto-adhésifs.

Un but de la présente invention est de proposer d'une part une nouvelle composition HMPSA dont le plastifiant est fabriqué à partir de matières premières renouvelables, et d'autre part un système multicouche comprenant une couche adhésive constituée de ladite composition, qui sont adaptés à la fabrication d'articles auto-adhésifs, notamment d'étiquettes auto-adhésives.

Un autre but de la présente invention est de proposer une composition HMPSA convenant à former la couche adhésive d'un système multicouche qui présente en outre un pouvoir adhésif approprié sur différents substrats, et même amélioré.

Un autre but de la présente invention est de proposer une composition HMPSA convenant à former la couche adhésive d'un système multicouche qui présente en outre un tack approprié sur différents substrats, et même amélioré.

Il a à présent été trouvé que ces buts peuvent être atteints en totalité ou en partie au moyen de la composition HMPSA et du système multicouche dont la couche adhésive en est constituée, tels que décrits ci-après.

La présente invention a donc pour objet en premier lieu une composition HMPSA qui comprend, sur la base du poids total de ladite composition :
- de 20 à 50 % en poids d'une composition (a1) de copolymères à bloc styrénique qui comprennent au moins un bloc élastomère ;
- de 35 à 65 % en poids d'une ou plusieurs résines tackifiantes (a2) ; et
- de 7 à 25 % en poids d'un plastifiant (a3) ;
caractérisée en ce que le plastifiant (a3) est constitué d'une composition (a3) comprenant une standolie (a3-1) d'une huile végétale.

Ladite composition HMPSA, outre sa teneur réduite en matières premières non renouvelables du fait de l'utilisation pour le plastifiant d'un dérivé d'huile végétale, est tout à fait adaptée à sa mise en œuvre dans un système multicouche convenant à la fabrication d'articles auto-adhésifs, et tout particulièrement à la fabrication d'étiquettes auto-adhésives, en raison de son pouvoir adhésif et de son tack.

En effet ladite composition HMPSA permet l'obtention d'un pouvoir adhésif (appelé aussi "pelage" ou "peel"), mesuré selon la méthode de test FINAT n°1, qui est avantageusement supérieur à 5 N/2,54 cm pour des substrats métalliques ou polymériques, et supérieur à 3 N/2,54 cm pour des substrats cartonnés. La composition HMPSA selon l'invention permet également l'obtention d'un tack, mesuré selon le test d'adhésion instantanée dit de la boucle décrit dans la méthode de test FINAT n°9, qui est avantageusement supérieur à 10 N/2,54 cm sur des substrats en verre supérieur à 8 N/2,54 cm sur des substrats polymériques et supérieur à 3 N/2,54 cm sur des substrats cartonnés.

De plus, tant le pouvoir adhésif que le tack sont, de manière surprenante, largement améliorés par rapport à ceux de compositions HMPSA dont le plastifiant est une huile végétale comme une huile de tournesol, de colza, de lin ou de soja.

### Composition (a1) de copolymères à bloc styrénique :

La composition HMPSA comprend de 20 à 50 % en poids d'une composition (a1) de copolymères à bloc styrénique qui comprennent au moins un bloc élastomère.

Lesdits copolymères à bloc styrénique ont une masse molaire moyenne en poids Mw généralement comprise entre 50 kDa et 500 kDa. Ils sont constitués de blocs de différents monomères polymérisés incluant au moins un bloc polystyrène (ou styrénique), et sont préparés par des techniques de polymérisation radicalaire.

En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Selon un mode de réalisation préféré, ladite composition (a1) est constituée, sur la base de son poids total :
- de 30 à 90 % en poids d'au moins un copolymère dibloc choisi dans le groupe comprenant les SI, SIB, SB, SEB, et SEP, et
- de 10 à 70 % en poids d'au moins un copolymère tribloc choisi dans le groupe comprenant les SIS, SIBS, SBS, SEBS et SEPS ;
la teneur en motifs styréniques totale de ladite composition (a1) variant de 10 à 40 % en poids sur la base du poids total de (a1).

Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères tri-bloc ont pour formule générale :

ABA (I)

dans laquelle :
- A représente un bloc non élastomère styrénique (ou polystyrène), et
- B représente un bloc élastomère qui peut être :
   - le polyisoprène. Le copolymère bloc a alors pour structure : polystyrène-polyisoprène-polystyrène, et pour dénomination : SIS ;
   - le polyisoprène suivi d'un bloc polybutadiène. Le copolymère bloc a alors pour structure : polystyrène-polyisoprène-polybutadiène-polystyrène, et pour dénomination : SIBS
   - le polybutadiène. Le copolymère bloc a alors pour structure : polystyrène- polybutadiène- polystyrène, et pour dénomination : SBS ;
   - le polybutadiène hydrogéné totalement ou en partie. Le copolymère bloc a alors pour structure: polystyrène-poly(éthylènebutylène)- polystyrène et pour dénomination : SEBS ;
   - le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque la composition (a1) comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis,* pour les copolymères diblocs.

On préfère utiliser une composition (a1) comprenant un copolymère tribloc et un copolymère dibloc ayant le même bloc élastomère, en raison notamment du fait que de tels mélanges sont disponibles commercialement.

Selon un mode de réalisation préféré, la teneur en copolymère dibloc de la composition (a1) va de 70 à 90 % en poids.

Les copolymères blocs styréniques à bloc élastomère, notamment de type SI et SIS, utilisables dans la composition (a1) sont disponibles commercialement, souvent sous la forme de mélanges tribloc/dibloc.

L' Europrène^{®} Sol T 166, disponible auprès de la société Polimeri Europa (Italie) est un mélange constitué, respectivement, de 90 % et de 10 % de tribloc SBS (M_{w} environ 121 kDa) et de dibloc SB (M_{w} environ 64 kDa), chacun de ces copolymères ayant environ 30 % de styrène.

Le Solprene^{®} 1205, disponible auprès de la société Dynasol, est un copolymère dibloc SB (M_{w} environ 100 kDa) ayant environ 30 % de styrène.

Le Kraton^{®} D1183 PT, disponible auprès de la société Kraton, est un mélange constitué, respectivement, de 62 % et de 38 % de tribloc SIS et de dibloc SI, ayant environ 16 % de styrène.

Le Kraton^{®} D1118, disponible auprès de la société Kraton, est un mélange constitué, respectivement, de 22 % et de 78 % de tribloc SBS et de dibloc SB, ayant environ 33 % de styrène.

Selon une variante préférée, la composition HMPSA comprend de 25 à 45 % en poids de la composition (a1) de copolymères à bloc styrénique, et encore plus préférentiellement de 31 à 40 % en poids.

### Résines tackifiantes (a2) :

La composition HMPSA comprend de 35 à 65 % en poids d'une ou plusieurs résines tackifiantes (a2).

La ou les résines tackifiantes (a2) utilisables ont des masses molaires moyennes en poids M_{w} généralement comprises entre 300 et 7000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La ou les résines tackifiantes (a2) ont une température de ramollissement généralement comprise entre 5 et 150 °C.

La température (ou point) de ramollissement des résines tackifiantes utilisables dans la composition selon l'invention peut varier de 5 à 140 °C. La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d' acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Selon un mode de réalisation préféré, la ou les résines tackifiantes mises en œuvre ont une température de ramollissement comprise entre 80 et 120°C, encore plus préférentiellement entre 90 et 110°C.

Les résines tackifiantes sont disponibles commercialement, et on peut citer par exemple dans les familles ci-dessus les produits suivants :
famille (i) : Sylvalite^{®} RE 100S de la société Arizona Chemical (ester de collophane et de pentaérythritol ayant une température de ramollissement d'environ 100°C ;
famille (ii) : Escorez^{®} 2203LC de la société ExxonMobil Chemical, ayant une température de ramollissement d'environ 93°C.

Selon une variante préférée, la composition HMPSA comprend de 40 à 60 % de résines tackifiantes (a2), encore plus préférentiellement de 40 à 55 % en poids.

### Plastifiant (a3) :

La composition HMPSA comprend de 7 à 25 % en poids d'un plastifiant (a3) qui est constitué d'une composition (a3) comprenant une standolie (a3-1) d'une huile végétale.

La standolie (a3-1) d'huile végétale (appelée également "standoil" en anglais) est obtenue par un procédé qui comprend une étape de chauffage de ladite huile végétale en l'absence de dioxygène à une température supérieure à 200°C, de préférence supérieure à 270°C, et encore plus préférentiellement comprise entre 270 °C et 360°C.

Il est généralement admis que ce chauffage entraîne une réaction de polymérisation thermique de l'huile, qui implique notamment la polymérisation des doubles liaisons et la réticulation des triglycérides correspondants, ce qui a pour effet une augmentation de la viscosité de ladite huile. Cette réaction est souvent désignée par "réaction de standolisation".

Le chauffage de l'huile végétale est maintenu durant un temps correspondant à l'obtention pour la standolie (a3-1) d'une viscosité Brookfield, mesurée à 20°C, supérieure ou égale à 50 mPa.s, de préférence à 100 mPa.s. Ladite viscosité est généralement inférieure à 100 Pa.s, de préférence inférieure à 60 Pa.s.

Selon une variante préférée, la standolie (a3-1) est une standolie d'une huile végétale dont les acides gras dérivés comprennent une proportion d'au moins 75 % d'acides gras incluant de 16 à 22 atomes de carbone, ladite proportion étant exprimée en pourcentage en poids sur la base du poids total des acides gras dérivés de ladite huile.

Une huile végétale est une composition d'esters triples d'acides gras et de glycérol (encore appelés "triglycérides"). Elle est obtenue à partir des graines de plantes et nombreuses bien sûr sont les huiles végétales largement disponibles au plan commercial.

On entend ainsi désigner par l'expression "acides gras dérivés de l'huile végétale" les acides gras présents dans la structure moléculaire de ces triglycérides. Lesdits acides gras peuvent être obtenus, sous la forme de composés isolés, par saponification, hydrolyse ou méthanolyse desdits triglycérides.

La proportion en acides gras incluant de 16 à 22 atomes de carbone est de manière davantage préférée d'au moins 80 % en poids, et encore plus préférentiellement d'au moins 85 % en poids, sur la base du poids total des acides gras dérivés de l'huile végétale.

Selon une variante tout particulièrement préférée, la standolie (a3-1) est une standolie d'une huile végétale choisie parmi l'huile de tournesol, de colza, de lin et de soja.

Selon un mode de réalisation, la standolie d'huile végétale (a3-1) est une standolie d'huile de soja, dont la viscosité Brookfield, mesurée à 20°C, est supérieure ou égale à 200 mPa.s, de préférence comprise dans le domaine allant de 0,2 à 9 Pa.s, particulièrement dans le domaine allant de 0,2 à 5 Pa.s.

Selon un autre mode de réalisation, la standolie d'huile végétale (a3-1) est une standolie d'huile de lin, dont la viscosité Brookfield, mesurée à 20°C, est supérieure ou égale à 100 mPa.s, et de préférence comprise dans le domaine allant de 0,1 à 60 Pa.s, particulièrement dans le domaine allant de 2 à 10 Pa.s.

Des standolies sont disponibles au plan commercial, et l'on peut citer par exemple :
- comme standolie de soja, le Veopol^{®} 315002 dont la viscosité Brookfield à 20°C est de 267 mPa.s et le Veopol^{®} 215035 dont la viscosité Brookfield à 20°C est de 4420 mPa.s;
- comme standolie de lin, le Veopol^{®} 212055 dont la viscosité Brookfield à 20°C est de 5870 mPa.s.

Ces produits sont disponibles auprès de la société Vandeputte.

Selon une variante préférée, la composition (a3) utilisable comme plastifiant est constituée d'une (ou plusieurs) standolie (a3-1).

Selon une autre variante, la composition (a3) utilisable comme plastifiant comprend, outre une standolie (a3-1), une huile végétale (a3-2) qui est choisie parmi l'huile de tournesol, de colza, de lin et de soja et dont les acides gras dérivés comprennent une proportion d'au moins 75 % d' acides gras incluant de 16 à 22 atomes de carbone, ledit pourcentage étant un pourcentage en poids exprimé sur la base du poids total des acides gras dérivés de l'huile végétale (a3-2). L'huile végétale (a3-2) peut être identique ou différente de l'huile végétale à partir de laquelle est obtenue la standolie (a3-1).

Conformément à cette dernière variante, la composition (a3) comprend de 50 à 100 % de la standolie (a3-1) et de 0 à 50 % de l'huile végétale (a3-2), ces pourcentages étant des pourcentages en poids exprimés sur la base du poids total de la composition (a3).

La proportion en acides gras incluant de 16 à 22 atomes de carbone dans le poids total des acides gras dérivés de l'huile végétale (a3-2) est de préférence d'au moins 80 % en poids, et encore plus préférentiellement d'au moins 85 % en poids.

Selon une variante préférée, la composition HMPSA comprend de 7 à 20 % en poids de plastifiant (a3), et plus préférentiellement de 10 à 19 %, et encore plus préférentiellement de 10 % à 15 %.

### Stabilisants (a4) :

Selon un mode de réalisation préféré, la composition HMPSA comprend en outre de 0,1 à 2 % d'un ou plusieurs stabilisants (ou anti-oxydant) (a4).

Ces composés sont introduits pour protéger ladite composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de BASF. Les anti-oxydants primaires peuvent être utilisés seuls ou en combinaison avec d'autres anti-oxydants tels que des phosphites comme l'Irgafos^{®} 168 également de BASF, ou encore avec des stabilisants UV tels que des amines.

### Cire (a5) :

La composition HMPSA selon l'invention peut encore inclure une cire (a5) d'un homopolymère de polyethylène (comme l'A-C^{®} 617 de Honeywell) ou d'un copolymère de polyéthylène et d'acétate de vinyle. La quantité correspondante peut aller jusqu'à 5 %.

Elle peut enfin éventuellement inclure des pigments, des colorants ou des charges.

Selon une variante préférée, la composition HMPSA comprend, et de préférence est constituée essentiellement :
- de 25 à 45 % en poids de la composition (a1) de copolymères à bloc styrénique ;
- de 40 à 60 % en poids de la ou des résines tackifiantes compatibles (a2) ; et
- de 7 à 20 % en poids du plastifiant (a3).

Selon une variante encore plus préférée, la composition HMPSA comprend, et de préférence est constituée essentiellement :
- de 31 à 40 % en poids de la composition (a1) de copolymères à bloc styrénique ;
- de 40 à 55 % en poids de la ou des résines tackifiantes compatibles (a2) ; et
- de 10 à 19 % en poids du plastifiant (a3).

La viscosité de la composition HMPSA, mesurée par un viscosimètre Brookfield^{®} RVT à 163°C, est comprise entre 4 et 50 Pa.s, de préférence entre 10 et 40 Pa.s. Une telle viscosité est particulièrement bien adaptée aux buses mises en œuvre dans les unités industrielles des enducteurs pour son enduction sur une couche support imprimable.

La composition thermofusible auto-adhésive selon l'invention est préparée par simple mélange de ses composants à une température comprise entre 130 et 200 °C, jusqu'à obtention d'un mélange homogène. Les techniques de mélange requises sont bien connues de l'homme du métier.

La présente invention a pour objet en second lieu un système multicouche comprenant :
- une couche adhésive (A) constituée de la composition HMPSA objet de l'invention;
- une couche support (B) adjacente à la couche adhésive (A) ; et
- une couche protectrice anti-adhérente (C), adjacente à la couche adhésive (A).

### Couche adhésive (A) :

Selon une variante préférée du système multicouche selon l'invention, l'épaisseur de la couche adhésive (A) est strictement supérieure à 10 µm, de préférence comprise dans un intervalle allant de 11 à 100 µm, plus préférentiellement de 12 à 35 µm.

### Couche support (B) :

La couche support (B) comprise dans le système multicouche selon l'invention est adjacente à la couche adhésive (A).

Selon une variante davantage préférée de l'invention, ladite couche (B) est constituée de papier ou d'un film comprenant une ou plusieurs couches homogènes d'un polymère.

Parmi les polymères appropriés, on peut citer les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes ; le polystyrène ; le caoutchouc naturel ou synthétique ; les copolymères vinyliques, tels que le polychlorure de vinyle, plastifié ou non plastifié, et les poly(acétate de vinyle) ; les copolymères oléfiniques, tels que les copolymères éthylène/méthacrylate, les copolymères éthylène/acétate de vinyle, les copolymères acrylonitrile/butadiène/styrène, et les copolymères éthylène/propylène ; les polymères et les copolymères acryliques ; les polyuréthanes ; les polyéthers ; les polyesters ; et les mélanges de ceux-ci.

De préférence, la couche support (B) est à base de polymères acryliques, de polyéthylène (PE), polypropylène (PP) orienté, non orienté ou bi-orienté, polyimide, polyuréthane, polyester tel que le Polyéthylène téréphtalate (PET).

Selon encore une autre variante, la couche support (B) est une couche support imprimable.

### Couche protectrice anti-adhérente (C) :

La couche anti-adhérente protectrice (C) peut être facilement enlevée sans modification de la couche (A) qui reste fixée sur la couche support (B).

Selon une variante préférée ladite couche (C) comprend un matériau à base de silicone, ledit matériau étant soit constitutif de ladite couche (C), soit présent sous la forme d'un revêtement de surface de ladite couche (C), ledit revêtement étant destiné à être en contact avec la couche adhésive (A).

Selon une variante préférée du système multicouche selon l'invention, ledit système est conditionné sous la forme d'un enroulement autour d'une bobine (ou rouleau) dont les dimensions peuvent varier dans un large domaine. Ainsi, le diamètre d'un tel rouleau peut aller de 0,25 à 1 m et sa largeur de 0,25 à 2 m.

Conformément à cette variante préférée, la couche anti-adhérente protectrice (C) est constituée par la couche support (B) comprise dans le système multicouche, dans laquelle la face qui est opposée à la face en contact avec la couche adhésive (A) est revêtue d'un matériau à base de silicone. Un tel système multicouche dans lequel la couche anti-adhérente protectrice (C) n'est pas distincte de la couche (B) est parfois désignée sous la dénomination anglaise de "linerless". Ledit conditionnement est particulièrement avantageux, en raison de sa simplicité et de l'économie qui en résulte, pour les transformateurs qui convertissent ces roll stocks en articles auto-adhésifs finaux, tels que les étiquettes ou les rubans auto-adhésifs.

La composition HMPSA est appliquée à l'état fondu à une température supérieure à 130°C sur la couche support (B) à raison d'une quantité qui est strictement supérieure à 10 g/m² et qui généralement va de 11 et 100 g/m², de préférence de 11 à 35 g/m², pour constituer la couche adhésive (A).

L'application est réalisée par des techniques d'enduction connues comme par exemple de type buse à lèvre (à une température d'environ 160 à 180°C) ou de type rideau (à une température d'environ 120 à 180 °C). L'application de l'HMPSA par buse à lèvre est généralement effectuée sur la couche protectrice anti-adhérente (C), l'ensemble étant alors contrecollé sur la couche support (B) (enduction par transfert). L'application de l'HMPSA par enduction de type rideau peut être directement réalisée sur la couche support (B), en fonction de la température d'enduction.

La présente invention concerne également l'utilisation du système multicouche tel que défini précédemment pour la fabrication d'articles auto-adhésifs, tels que des étiquettes auto-adhésives et des rubans adhésifs.

L'invention a également pour objet une étiquette auto-adhésive susceptible d'être obtenue par transformation du système multicouche décrit précédemment. Une couche support imprimable (B) est dans ce cas préférée.

Le procédé de transformation mis en œuvre comprend généralement :
- une étape d'impression sur la couche support imprimable (B), puis
- une étape de découpe du système multicouche de manière à en réduire la largeur, et donc à le reconditionner sur une bobine de largeur réduite, puis
- une étape (qualifiée d'échenillage) d'obtention d'un système multicouche, conditionné sur la bobine de l'étape précédente, dans lequel la couche protectrice anti-adhérente (C), inchangée, est liée à la seule partie de la couche support imprimée qui correspond à la forme et aux dimensions de l'étiquette auto-adhésive adaptées à son utilisation finale. Cette étape consiste donc en la découpe sélective, puis en l'élimination de la partie indésirable de la couche support imprimable (B) et de la couche adhésive (A), ladite partie étant souvent appelée "squelette de l'étiquette".

Ce dernier système multicouche est mis en œuvre sur les chaînes de conditionnement des articles à étiqueter, comme par exemple des emballages, au moyen de systèmes automatisés qui séparent les étiquettes auto-adhésives de la couche protectrice, et les fixent sur les articles à étiqueter. L'article étiqueté est de préférence un emballage ou récipient constitué :
- de verre ;
- d'une matière plastique usuelle choisie parmi le PolyEthylène Téréphtalate (PET), le PolyChlorure de Vinyle (PVC), le PolyEthylène (PE), notamment le PolyEthylène Haute Densité (HDPE), ou encore le PolyPropylène (PP) ; ou
- de carton, tel que par exemple le carton connu sous la dénomination de carton FIPAGO (dénomination provenant de la Fédération Internationale des fabricants de PApiers GOmmés) de grade Kraftliner et grammage 200 g/m².

Les exemples suivants sont donnés à titre purement illustratif de l'invention et ne sauraient être interprétés de manière à en limiter la portée.

### Exemples A (référence), exemples 1 à 6 (selon l'invention) et B, C, D (comparatifs) :

Les compositions figurant dans le tableau 1 suivant sont préparées par simple mélange à chaud à 180 °C des ingrédients indiqués.

La viscosité Brookfield de ces compositions a été mesurée à la température de 163°C. Le résultat est indiqué dans le Tableau 2 en mPa.s.

Ces compositions ont également été testées selon les tests décrits ci-après.

### Pouvoir adhésif : test de peel

Le pouvoir adhésif des compositions est évalué par le test de pelage (ou peel) à 180°C sur une plaque d'un certain substrat, tel que décrit dans la méthode de test FINAT n° 1, publiée dans le Manuel Technique FINAT 6^{ème} édition, 2001. FINAT est la fédération internationale des fabricants et transformateurs d'étiquettes auto-adhésives.

Le principe de ce test est le suivant. L'HMPSA est préalablement enduit à raison de 20 g/m² sur une couche support constituée d'un film PET de 50 µm d'épaisseur.

Une éprouvette sous forme de bande rectangulaire (25,4 mm x 175 mm) est découpée dans le support auto-adhésif ainsi obtenu. Cette éprouvette est fixée sur une plaque constituée d'un certain substrat. L'assemblage obtenu est laissé 20 mn à température ambiante. Il est alors introduit dans un appareil de traction capable d'effectuer le pelage ou décollement de la bande sous un angle de 180° et avec une vitesse de séparation de 300 mm par minute. L'appareil mesure la force requise pour décoller la bande dans ces conditions.

Le résultat est exprimé en N/2,54 cm et est indiqué, ainsi que la nature du substrat de la plaque, dans le Tableau 2.

### Pouvoir collant immédiat : test du loop tack

Le pouvoir collant immédiat ou tack des compositions est évalué par le test d'adhésion instantanée dit de la boucle (également appelé "loop tack"), décrit dans la méthode de test FINAT n° 9.

L'HMPSA est préalablement enduit à raison de 20 g/m² sur une couche support constituée d'un film PET de 50 µm d'épaisseur, de manière à obtenir une bande rectangulaire de 25,4 mm sur 175 mm. Les 2 extrémités de cette bande sont jointes de manière à former une boucle dont la couche d'adhésif est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque horizontale d'un certain substrat de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque de substrat.

Le résultat est exprimé en N/2,54 cm et est indiqué, ainsi que la nature du substrat de la plaque horizontale, dans le Tableau 2.

Les résultats de peel et de tack obtenus pour les exemples 1 à 6 à base de plastifiant constitué de standolies sont globalement du même ordre que ceux de l'exemple A dont le plastifiant est d'origine pétrolière.

Lesdits résultats sont également significativement améliorés par rapport aux résultats obtenus pour les exemples B, C et D à base d'huile végétale.

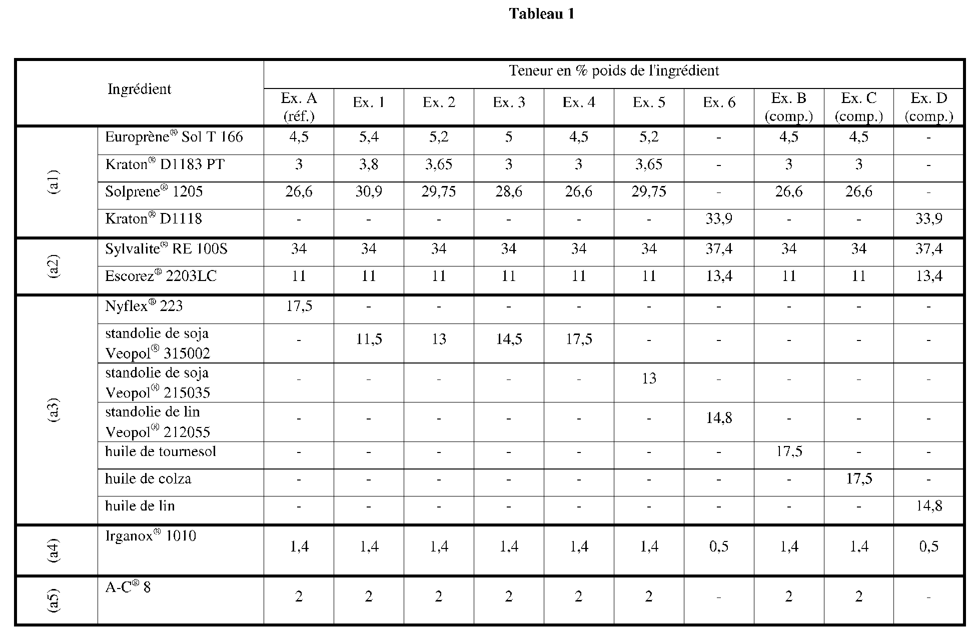

**Tableau 2**

| Mesure et tests | **Résultats** | | | | | | | | | |
|---|---|---|---|---|---|---|---|---|---|---|
| | Ex. A (réf.) | Ex. 1 | Ex. 2 | Ex. 3 | Ex. 4 | Ex. 5 | Ex. 6 | Ex. B (comp.) | Ex. C (comp.) | Ex. D (comp.) |
| Viscosité Brookfield à 163°C (en mPa.s) | 13250 | 33300 | 27700 | 22800 | 15450 | 32000 | 15650 | 14000 | 13650 | 8900 |
| Peel sur acier inox. (N/2,54 cm) | 15,4 | 17,7 | 15,1 | 13,0 | 10,3 | 23,7 | 25,4 | 5,6 | 8,3 | 17,6 |
| Peel sur HDPE (N/2,54 cm) | 15,3 | 17,2 | 14,6 | 13,0 | 10,4 | 20,5 | 17,0 | 5,4 | 7,5 | 7,8 |
| Peel sur PP (N/2,54 cm) | 15,7 | 17,5 | 14,5 | 13,4 | 10,3 | 22,7 | 26,0 | 5,8 | 7,6 | 19,0 |
| Peel sur carton Fipago (N/2,54 cm) | 10,1 | 15,3 | 11,3 | 8,9 | 7,0 | 16,5 | 3,9 | 3,4 | 3,3 | 4,6 |
| Loop tack sur verre (N/2,54 cm) | 32,2 | 35,5 | 31,9 | 29,7 | 24,2 | 43,3 | 47,1 | 15,7 | 17,9 | 25,2 |
| Loop tack sur HDPE (N/2,54 cm) | 22,2 | 13,1 | 20,1 | 23,1 | 23,6 | 14,9 | 22,6 | 15,6 | 17,5 | 15,3 |
| Loop tack sur PP (N/2,54 cm) | 29,2 | 35,3 | 31,5 | 29,2 | 23,6 | 35,0 | 32,6 | 16,1 | 17,4 | 16,0 |
| Loop tack sur carton Fipago (N/2,54 cm) | 8,4 | 7,8 | 7,5 | 7,3 | 8,1 | 9,0 | 3,1 | 5,9 | 5,9 | 8,5 |

## Revendications

1. Composition HMPSA qui comprend, sur la base du poids total de ladite composition :
- de 20 à 50 % en poids d'une composition (a1) de copolymères à bloc styrénique qui comprennent au moins un bloc élastomère ;
- de 35 à 65 % en poids d'une ou plusieurs résines tackifiantes (a2) ; et
- de 7 à 25 % en poids d'un plastifiant (a3) ;
**caractérisée en ce que** le plastifiant (a3) est constitué d'une composition (a3) comprenant une standolie (a3-1) d'une huile végétale.

2. Composition HMPSA selon la revendication 1, **caractérisée en ce que** la composition (a1) de copolymères à bloc styrénique est constituée, sur la base de son poids total :
- de 30 à 90 % en poids d'au moins un copolymère dibloc choisi dans le groupe comprenant les SI, SIB, SB, SEB, et SEP, et
- de 10 à 70 % en poids d'au moins un copolymère tribloc choisi dans le groupe comprenant les SIS, SIBS, SBS, SEBS et SEPS ;
la teneur en motifs styréniques totale de ladite composition (a1) variant de 10 à 40 % en poids sur la base du poids total de (a1).

3. Composition HMPSA selon l'une des revendications 1 ou 2, **caractérisée en ce que** la résine tackifiante (a2) est choisie parmi :
- (i) les colophanes d'origine naturelle ou modifiées et leurs dérivés hydrogénés, deshydrogénés, dimérisés, polymérisés ou estérifiés par des monoalcools ou des polyols ;
- (ii) des résines obtenues par hydrogénation, polymérisation ou copolymérisation (avec un hydrocarbure aromatique) de mélanges d'hydrocarbures insaturés ayant environ 5, 9 ou 10 atomes de carbone issus de coupes pétrolières ;
- (iii) des résines terpéniques résultant de la polymérisation d'hydrocarbures terpéniques en présence de catalyseurs de Friedel-Crafts, éventuellement modifiées par action de phénols ;
- (iv) des copolymères à base de terpènes naturels.

4. Composition HMPSA selon l'une des revendications 1 à 3, **caractérisée en ce que** la standolie (a3-1) d'huile végétale est obtenue par un procédé qui comprend une étape de chauffage de ladite huile végétale en l'absence de dioxygène à une température supérieure à 200°C, de préférence supérieure à 270°C.

5. Composition HMPSA selon la revendication 4, **caractérisée en ce que** le chauffage de l'huile végétale est maintenu durant un temps correspondant à l'obtention pour la standolie (a3-1) d'une viscosité Brookfield, mesurée à 20°C, supérieure ou égale à 50 mPa.s,

6. Composition HMPSA selon l'une des revendications 1 à 5, **caractérisée en ce que** la standolie (a3-1) est une standolie d'une huile végétale dont les acides gras dérivés comprennent une proportion d'au moins 75 % d'acides gras incluant de 16 à 22 atomes de carbone, ladite proportion étant exprimée en pourcentage en poids sur la base du poids total des acides gras dérivés de ladite huile.

7. Composition HMPSA selon l'une des revendications 1 à 6, **caractérisée en ce que** la standolie (a3-1) est une standolie d'une huile végétale choisie parmi l'huile de tournesol, de colza, de lin et de soja.

8. Composition HMPSA selon l'une des revendications 1 à 7, **caractérisée en ce que** la composition (a3) utilisable comme plastifiant est constituée de la standolie (a3-1).

9. Composition HMPSA selon l'une des revendications 1 à 7, **caractérisée en ce que** la composition (a3) utilisable comme plastifiant comprend, outre la standolie (a3-1), une huile végétale (a3-2) qui est choisie parmi l'huile de tournesol, de colza, de lin et de soja et dont les acides gras dérivés comprennent une proportion d'au moins 75 % d' acides gras incluant de 16 à 22 atomes de carbone, ledit pourcentage étant un pourcentage en poids exprimé sur la base du poids total des acides gras dérivés de l'huile végétale (a3-2).

10. Système multicouche comprenant :
- une couche adhésive (A) constituée de la composition HMPSA telle que définie dans l'une des revendications 1 à 9 ;
- une couche support (B) adjacente à la couche adhésive (A) ; et
- une couche protectrice anti-adhérente (C), adjacente à la couche adhésive (A).

11. Système multicouche selon la revendication 10, **caractérisé en ce que** l'épaisseur de la couche adhésive (A) est strictement supérieure à 10 µm, et de préférence comprise dans un intervalle allant de 11 à 100 µm.

12. Système multicouche selon l'une des revendications 1 à 11, **caractérisé en ce qu'**il est conditionné sous la forme d'un enroulement autour d'une bobine.

13. Système multicouche selon la revendication 12, **caractérisé en ce que** la couche anti-adhérente protectrice (C) est constituée par la couche support (B) dans laquelle la face qui est opposée à la face en contact avec la couche adhésive (A) est revêtue d'un matériau à base de silicone.

14. Utilisation du système multicouche tel que défini dans l'une des revendications 1 à 13, pour la fabrication d'articles auto-adhésifs.

15. Etiquette auto-adhésive susceptible d'être obtenue par transformation du système multicouche tel que défini dans l'une des revendications 1 à 13.

## Patentansprüche

1. HMPSA-Zusammensetzung, die, bezogen auf das Gesamtgewicht der Zusammensetzung, Folgendes umfasst:
- 20 bis 50 Gew.-% einer Zusammensetzung (a1) von Styrolblockcopolymeren mit mindestens einem Elastomerblock;
- 35 bis 65 Gew.-% eines oder mehrerer Klebrigmacherharze (a2) und
- 7 bis 25 Gew.-% eines Weichmachers (a3);
**dadurch gekennzeichnet, dass** der Weichmacher (a3) aus einer Zusammensetzung (a3) besteht, die ein Standöl (a3-1) eines Pflanzenöls umfasst.

2. HMPSA-Zusammensetzung nach Anspruch 1, **dadurch gekennzeichnet, dass** die Zusammensetzung (a1) von Styrolblockcopolymeren, bezogen auf ihr Gesamtgewicht, aus:
- 30 bis 90 Gew.-% mindestens eines Zweiblockcopolymers aus der Gruppe umfassend SI, SIB, SB, SEB und SEP und
- 10 bis 70 Gew.-% mindestens eines Dreiblockcopolymers aus der Gruppe umfassend SIS, SIBS, SBS, SEBS und SEPS
besteht;
wobei der Gesamtgehalt an Styroleinheiten der Zusammensetzung (a1) im Bereich von 10 bis 40 Gew.-%, bezogen auf das Gesamtgewicht von (a1), liegt.

3. HMPSA-Zusammensetzung nach Anspruch 1 oder 2, **dadurch gekennzeichnet, dass** das Klebrigmacherharz (a2) aus:
- (i) Kolophoniumharzen natürlichen Ursprungs oder modifizierten Kolophoniumharzen und hydrierten, dehydrierten, dimerisierten, polymerisierten oder mit Monoalkoholen oder Polyolen veresterten Derivaten davon;
- (ii) durch Hydrierung, Polymerisation oder Copolymerisation (mit einem aromatischen Kohlenwasserstoff) von Mischungen von ungesättigten Kohlenwasserstoffen mit ungefähr 5, 9 oder 10 Kohlenstoffatomen, die aus Erdölfraktionen stammen, erhaltenen Harzen;
- (iii) gegebenenfalls durch Einwirkung von Phenolen modifizierten Terpenharzen, die bei der Polymerisation von Terpen-Kohlenwasserstoffen in Gegenwart von Friedel-Crafts-Katalysatoren anfallen;
- (iv) Copolymeren auf Basis von natürlichen Terpenen
ausgewählt ist.

4. HMPSA-Zusammensetzung nach einem der Ansprüche 1 bis 3, **dadurch gekennzeichnet, dass** das Standöl (a3-1) eines Pflanzenöls durch ein Verfahren erhalten wird, das einen Schritt des Erhitzens des Pflanzenöls in Abwesenheit von Disauerstoff auf eine Temperatur über 200 °C, vorzugsweise über 270 °C, umfasst.

5. HMPSA-Zusammensetzung nach Anspruch 4, **dadurch gekennzeichnet, dass** das Erhitzen des Pflanzenöls über einen Zeitraum aufrechterhalten wird, der dem Erhalt einer bei 20 °C gemessenen Brookfield-Viskosität größer oder gleich 50 mPa.s für das Standöl (a3-1) entspricht.

6. HMPSA-Zusammensetzung nach einem der Ansprüche 1 bis 5, **dadurch gekennzeichnet, dass** es sich bei dem Standöl (a3-1) um ein Standöl eines Pflanzenöls handelt, dessen abgeleitete Fettsäuren einen Anteil von mindestens 75 % Fettsäuren mit 16 bis 22 Kohlenstoffatomen umfassen, wobei der Anteil in Gewichtsprozent bezogen auf das Gesamtgewicht der von dem Öl abgeleiteten Fettsäuren angegeben wird.

7. HMPSA-Zusammensetzung nach einem der Ansprüche 1 bis 6, **dadurch gekennzeichnet, dass** es sich bei dem Standöl (a3-1) um ein Standöl eines Pflanzenöls handelt, das aus Sonnenblumenöl, Rapsöl, Leinöl und Sojaöl ausgewählt ist.

8. HMPSA-Zusammensetzung nach einem der Ansprüche 1 bis 7, **dadurch gekennzeichnet, dass** die als Weichmacher verwendbare Zusammensetzung (a3) aus dem Standöl (a3-1) besteht.

9. HMPSA-Zusammensetzung nach einem der Ansprüche 1 bis 7, **dadurch gekennzeichnet, dass** die als Weichmacher verwendbare Zusammensetzung (a3) außer dem Standöl (a3-1) ein Pflanzenöl (a3-2) umfasst, das aus Sonnenblumenöl, Rapsöl, Leinöl und Sojaöl ausgewählt ist und dessen abgeleitete Fettsäuren einen Anteil von mindestens 75 % Fettsäuren mit 16 bis 22 Kohlenstoffatomen umfassen, wobei der Anteil in Gewichtsprozent, bezogen auf das Gesamtgewicht der von dem Pflanzenöl (a3-2) abgeleiteten Fettsäuren angegeben wird.

10. Mehrschichtsystem, umfassend:
- eine Klebstoffschicht (A), die aus der HMPSA-Zusammensetzung gemäß einem der Ansprüche 1 bis 9 besteht;
- eine Trägerschicht (B), die der Klebstoffschicht (A) benachbart ist; und
- eine nichthaftende Schutzschicht (C), die der Klebstoffschicht (A) benachbart ist.

11. Mehrschichtsystem nach Anspruch 10, **dadurch gekennzeichnet, dass** die Dicke der Klebstoffschicht (A) streng größer als 10 µm ist und vorzugsweise in einem Bereich von 11 bis 100 µm liegt.

12. Mehrschichtsystem nach einem der Ansprüche 1 bis 11, **dadurch gekennzeichnet, dass** es in Form einer Rolle auf einer Spule verpackt ist.

13. Mehrschichtsystem nach Anspruch 12, **dadurch gekennzeichnet, dass** die nichthaftende Schutzschicht (C) aus der Trägerschicht (B) besteht, wobei die Seite, die der mit der Klebstoffschicht (A) in Kontakt stehenden Seite entgegengesetzt ist, mit einem Material auf Silikonbasis beschichtet ist.

14. Verwendung des Mehrschichtsystems gemäß einem der Ansprüche 1 bis 13 zur Herstellung von selbstklebenden Artikeln.

15. Selbstklebendes Etikett, das durch Umwandlung des Mehrschichtsystems gemäß einem der Ansprüche 1 bis 13 erhältlich ist.

## Claims

1. An HMPSA composition which comprises, on the basis of the total weight of said composition:
- from 20% to 50% by weight of a composition (a1) of styrene block copolymers which comprise at least one elastomer block;
- from 35% to 65% by weight of one or more tackifying resins (a2); and
- from 7% to 25% by weight of a plasticizer (a3);
**characterized in that** the plasticizer (a3) consists of a composition (a3) comprising a stand oil (a3-1) of a vegetable oil.

2. The HMPSA composition as claimed in claim 1, **characterized in that** the composition (a1) of styrene block copolymers consists, on the basis of its total weight:
- of 30% to 90% by weight of at least one diblock copolymer chosen from the group comprising SI, SIB, SB, SEB and SEP, and
- of 10% to 70% by weight of at least one triblock copolymer chosen from the group comprising SIS, SIBS, SBS, SEBS and SEPS;
the total content of styrene units of said composition (a1) ranging from 10% to 40% by weight on the basis of the total weight of (a1).

3. The HMPSA composition as claimed in either of claims 1 and 2, **characterized in that** the tackifying resin (a2) is chosen from:
- (i) rosins of natural origin or modified rosins and derivatives thereof which are hydrogenated, dehydrogenated, dimerized, polymerized or esterified with monoalcohols or polyols;
- (ii) resins obtained by hydrogenation, polymerization or copolymerization (with an aromatic hydrocarbon) of mixtures of unsaturated hydrocarbons having around 5, 9 or 10 carbon atoms derived from petroleum cuts;
- (iii) terpene resins resulting from the polymerization of terpene hydrocarbons in the presence of Friedel-Crafts catalysts, which are optionally modified by the action of phenols;
- (iv) copolymers based on natural terpenes.

4. The HMPSA composition as claimed in one of claims 1 to 3, **characterized in that** the vegetable oil stand oil (a3-1) is obtained by a process which comprises a step of heating said vegetable oil in the absence of dioxygen at a temperature above 200°C, preferably above 270°C.

5. The HMPSA composition as claimed in claim 4, **characterized in that** the heating of the vegetable oil is maintained for a time corresponding to the obtaining, for the stand oil (a3-1), of a Brookfield viscosity, measured at 20°C, of greater than or equal to 50 mPa.s.

6. The HMPSA composition as claimed in one of claims 1 to 5, **characterized in that** the stand oil (a3-1) is a stand oil of a vegetable oil, of which the derived fatty acids comprise a proportion of at least 75% of fatty acids including from 16 to 22 carbon atoms, said proportion being expressed as a percentage by weight on the basis of the total weight of the fatty acids derived from said oil.

7. The HMPSA composition as claimed in one of claims 1 to 6, **characterized in that** the stand oil (a3-1) is a stand oil of a vegetable oil chosen from sunflower, rapeseed, linseed and soybean oil.

8. The HMPSA composition as claimed in one of claims 1 to 7, **characterized in that** the composition (a3) which can be used as plasticizer consists of the stand oil (a3-1).

9. The HMPSA composition as claimed in one of claims 1 to 7, **characterized in that** the composition (a3) which can be used as plasticizer comprises, in addition to the stand oil (a3-1), a vegetable oil (a3-2) which is chosen from sunflower, rapeseed, linseed and soybean oil and of which the derived fatty acids comprise a proportion of at least 75% of fatty acids including from 16 to 22 carbon atoms, said percentage being a percentage by weight expressed on the basis of the total weight of the fatty acids derived from the vegetable oil (a3-2).

10. A multilayer system comprising:
- an adhesive layer (A) consisting of the HMPSA composition as defined in one of claims 1 to 9;
- a support layer (B) adjacent to the adhesive layer (A); and
- a nonstick protective layer (C), adjacent to the adhesive layer (A).

11. The multilayer system as claimed in claim 10, **characterized in that** the thickness of the adhesive layer (A) is strictly greater than 10 µm, and preferably within a range of from 11 to 100 µm.

12. The multilayer system as claimed in one of claims 1 to 11, **characterized in that** it is packaged in the form of a winding around a reel.

13. The multilayer system as claimed in claim 12, **characterized in that** the protective nonstick layer (C) consists of the support layer (B) wherein the face which is opposite the face in contact with the adhesive layer (A) is coated with a silicone-based material.

14. The use of the multilayer system as defined in one of claims 1 to 13, for the manufacture of self-adhesive articles.

15. A self-adhesive label capable of being obtained by conversion of the multilayer system as defined in one of claims 1 to 13.
